# EUROPEAN PATENT APPLICATION

(11) **EP 2 457 802 A2**
(43) Date of publication of application: **30.05.2012**
(21) Application number: 10802419.1
(22) Date of filing: 14.07.2010
(51) Int. Cl.: B62B 5/06, B62B 3/14, B60B 33/04, B62D 1/12

(54) **MANUALLY DIRECTIONALLY CONTROLLED TRANSPORTING APPARATUS**

(30) Priority: 24.07.2009 KR 20090067950; 07.04.2010 KR 20100031923
(71) Applicant: Lee, Sung-Geon, Gyeonggi-do 153-801 (KR)
(72) Inventor: Lee, Sung-Geon, Gyeonggi-do 153-801 (KR)
(74) Representative: Roos, Peter
(86) International application number: PCT/KR2010/004577
(87) International publication number: WO 2011/010826

(57) **Abstract**

Provided is a manual direction controlled transport apparatus including: a body to which a handle transferring manipulation power of a user is combined; a driving unit including one or more wheel units combined to the body, and moving the body; and a steering unit combined to the handle, and controlling a rotation direction of the body by transferring the manipulation power to the wheel unit to adjust a heading direction of the wheel unit. A direction of the manual direction controlled transport apparatus is easily adjusted with a little effort even when the manual direction controlled transport apparatus is heavy.

## Description

### BACKGROUND OF THE INVENTION

### 1. Field of the Invention

The present invention relates to a manual direction controlled transport apparatus, and more particularly, to a manual direction controlled transport apparatus including a steering unit.

### 2. Description of the Related Art

Generally, a great number of carts are provided in most places selling products like daily necessities and small appliances, such as large-scale discount stores, large-scale grocery stores, and large-scale supermarkets, so as to serve consumers' convenience.

Wheels are installed to the cart and thus the cart can be easily transferred even when the cart is loaded with many products because of a rolling action of each wheel. However, if the cart weighs too much as the cart is loaded with too many various products or if the cart is not balanced, it is difficult to smoothly control the wheels. At this time, it is difficult for a user to change a direction of the cart to a desired direction, and in severe cases, the cart may bump into displayed products or another customer, followed by a negative effect, such as collapsing of the displayed products or hurting the other customer.

Reasons for such a negative effect are that the 4 wheels installed to the cart freely rotate in 360°, and the center of gravity of the cart is not at the center but may lean to one side due to a structure of the cart.

Furthermore, the cart may not move to a desired direction due to uneven wear of a bearing installed to a wheel axle according to long use or due to uneven deterioration of a bearing installed to joint of a cart frame and the wheel. If the bearing unevenly wears out as above, the cart may be pulled to the left or right while moving the cart even when the cart is not loaded with a load.

### SUMMARY OF THE INVENTION

The present invention provides a manual direction controlled transport apparatus for easily moving a direction by installing a steering unit to the manual direction controlled transport apparatus.

According to an aspect of the present invention, there is provided a manual direction controlled transport apparatus including: a body to which a handle transferring manipulation power of a user is combined; a driving unit including one or more wheel units combined to the body, and moving the body; and a steering unit combined to the handle, and controlling a rotation direction of the body by transferring the manipulation power to the wheel unit to adjust a heading direction of the wheel unit.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a manual direction controlled transport apparatus according to an embodiment of the present invention;
FIG. 2 is a plan view for describing a method of operating a steering unit of FIG. 1, according to an embodiment of the present invention;
FIG. 3 is a magnified view of a front wheel unit of a shopping cart of FIG. 1;
FIG. 4 is a plan view for describing a method of operating a steering unit, according to another embodiment of the present invention;
FIG. 5 is a magnified view of the steering unit of a shopping cart of FIG. 4;
FIG. 6 is a side view of a second steering unit of FIG. 5;
FIG. 7 is a plan view of a wheel unit according to an embodiment of the present invention;
FIG. 8 is a partial magnified view of a second guide bar and a second guide housing of FIG. 7;
FIG. 9 is a plan view of a wheel unit of a steering unit of FIG. 7, according to another embodiment of the present invention;
FIG. 10 is a conceptual diagram for describing a method of controlling a steering unit of FIG. 1; and
FIG. 11 is a conceptual diagram for describing a method of controlling a steering unit of FIG. 10.

### DETAILED DESCRIPTION OF THE INVENTION

Hereinafter, the present invention will be described more fully with reference to the accompanying drawings, in which exemplary embodiments of the invention are shown. Terms and words used herein should not be construed as common or dictionary definitions, but should be interpreted to have meanings and concepts suitable to the present invention based on principles that an inventor can suitably define concepts of terms in the best way possible to describe the invention.

A manual direction controlled transport apparatus of the present invention may be applied to a wheelchair, a stroller, a hospital bed for a patient or old and infirm, a bed cart for an infant, or a travelling carrier, as well as a shopping cart. However, a shopping cart according to an embodiment of the present invention will be described in detail.

Accordingly, the invention may be embodied in many different forms and should not be construed as being limited to the embodiments set forth herein; rather, these embodiments are provided so that this disclosure will be thorough and complete, and will fully convey the concept of the invention to those skilled in the art.

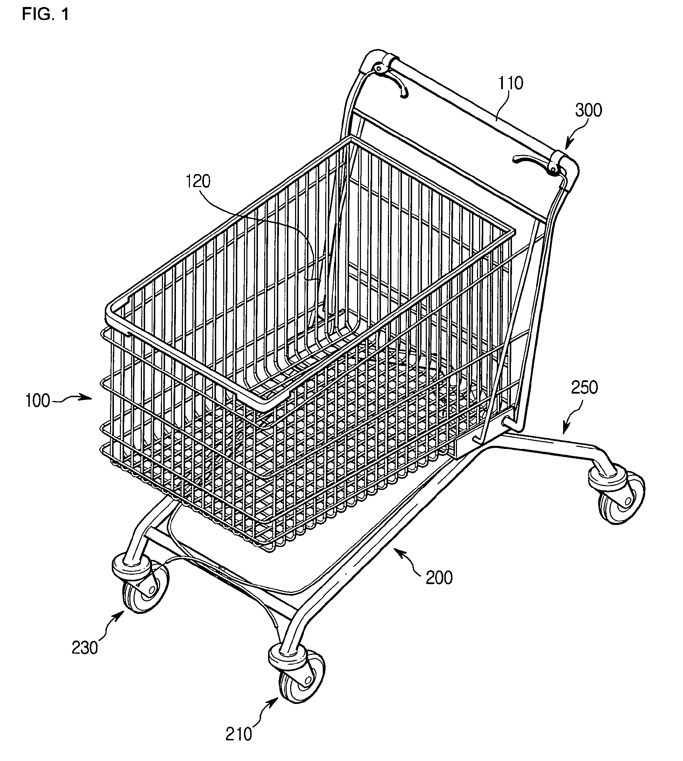

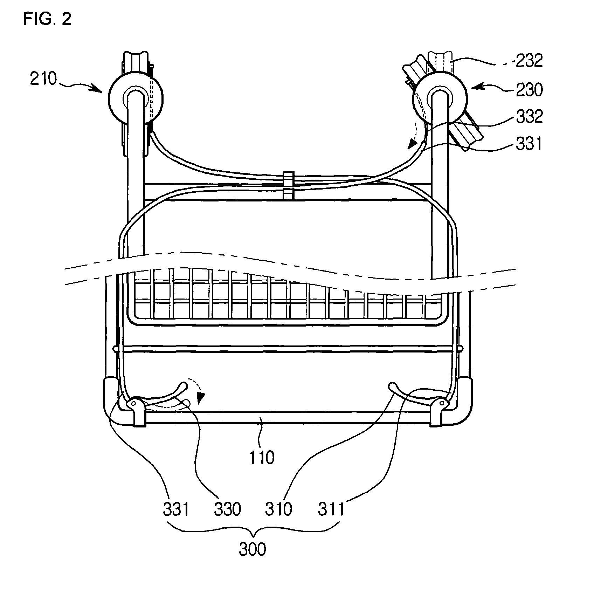

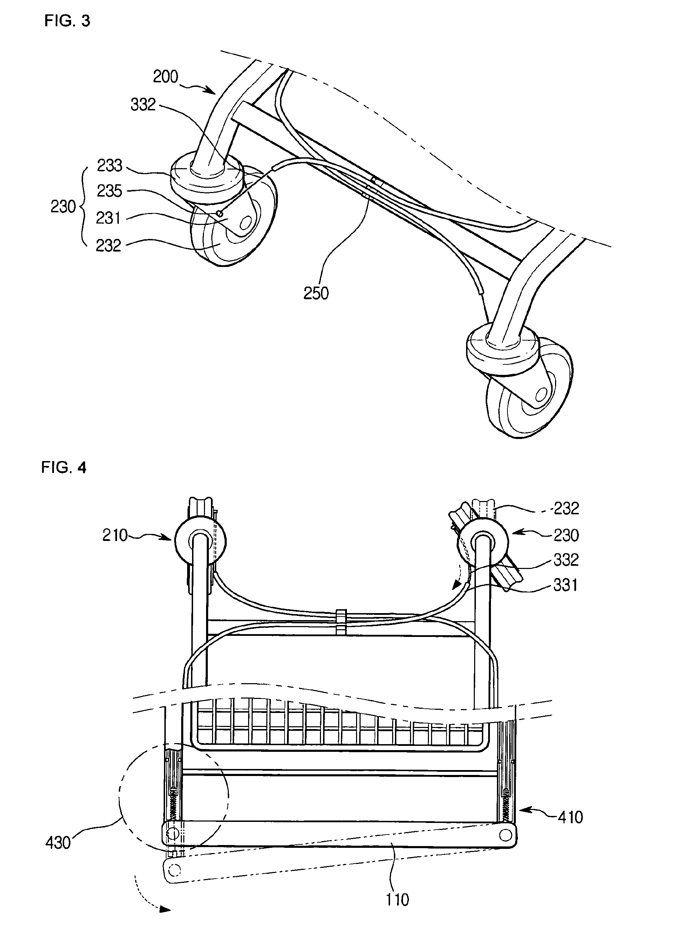

FIGS. 1 through 3 illustrate a shopping cart as an example of a manual direction controlled transport apparatus according to an embodiment of the present invention. FIG. 1 is a perspective view of the shopping cart, FIG. 2 is a magnified view of a front wheel unit of the shopping cart of FIG. 1, and FIG. 3 is a plane view of the shopping cart of FIG. 1. Referring to FIGS. 1 through 3, the shopping cart includes a body 100, a driving unit 200, and a first steering unit 300. A storage unit 120 having a load space for storing a product, and a handle 110 for transferring manipulation power of a user are combined to the body 100. Grip strength applied as the user grips the handle 110 is generally used as the manipulation power, and the user adjusts each of steering angles of a first front wheel unit 210 and a second front wheel unit 230 by adjusting the grip strength. Here, a wheel unit described in claims is a collective name for a front wheel unit including first and second front wheel units and a rear wheel unit including first and second rear wheel units, and does not limit the front and rear wheel units and left and right wheels based on the body.

The first steering unit 300 includes first and second steering levers 310 and 330, and first and second cables 311 and 331. The first and second steering levers 310 and 330 are respectively combined to the left and right of the handle 110. A first wire 312 is embedded in the first cable 311. One end of the first wire 312 is connected to the first steering lever 310 and another end of the first wire 312 is connected to the first front wheel unit 210. Also, a second wire 332 is embedded in the second cable 331. One end of the second wire 332 is connected to the second steering lever 330 and another end of the second wire 332 is connected to the first front wheel unit 210.

The first and second cables 311 and 331 connect the first and second steering levers 310 and 330 and the first and second front wheel units 210 and 230 by crossing them in an X shape.

The first and second steering levers 310 and 330 are fixed to the handle 110 at each end to rotate in a predetermined angle, and the first and second cables 311 and 331 are respectively connected to fixed ends of the first and second steering levers 310 and 330. Since the first and second wires 312 and 332 have one sides combined to the first and second steering levers 310 and 330 via the first and second cables 311 and 331 and other sides combined to the first and second front wheel units 210 and 230, a steering angle may be adjusted as the user adjusts the grip strength by pulling the first and second steering levers 310 and 330.

The first and second cables 311 and 331 are installed from the handle 110 through a portion connected to the driving unit 220 along one side corner of the body 100 up to the top of the first and second front wheel units 210 and 230 along a frame of the driving unit 200.

Here, the first and second cables 311 and 331 connect the first and second steering levers 310 and 330 and the first and second front wheel units 210 and 230 by crossing them in an X shape at the ends of the handle 110 so as to prevent resistance from being generated at the first and second wires 312 and 332 as the first and second cables 311 and 331 are sharply bended and to approach the first and second front wheel units 210 and 230 in a horizontal direction instead of a vertical direction during steering.

The first and second front wheel units 210 and 230 are rotatable by 360° with respect to the driving unit 200, and the first and second cables 311 and 331 are not used to put the brakes on the first and second front wheel units 210 and 230 but to adjust an angle of the first and second front wheel units 210 and 230 that are rolling. Here, 360° rotation does not mean rotation of a wheel rolling while contacting a road but means that a wheel and a bracket installed to the driving unit 200 are rotating to change a direction. Also, a support piece 250 is further provided at one side of the driving unit 200 so as to support tensile force of each of the first and second wires 312 and 332 embedded in the first and second cables 311 and 331.

Accordingly, by operating the first and second steering levers 310 and 330, a wheel on an outer side based on a turning direction is rotated, and thus a direction of the shopping cart is more efficiently controlled compared to when a wheel on an inner side with respect to a center of gravity of the shopping cart is controlled.

The front wheel unit 230 is disposed on a right front side based on a heading direction. In the second front wheel unit 230, a second bearing 233 is combined to a curved end of the driving unit 200, a second bracket 231 is rotatably combined to the second bearing 233, and a second wheel 232 is rotatably combined to a pair of facing protruding units (not shown) protruding from the second bracket 231. Here, the second wheel 232 may be a urethane wheel for ordinary floors or a wheel for moving walks.

A second fixing projection 235 may be formed on the protruding unit of the second bracket 231. The second wire 332 interlocked with the second steering lever 330 is connected to the second fixing projection 235. Also, the first front wheel unit 210 is combined to the driving unit 200 and includes a first bracket 211 including a first fixing projection 215, and a first wheel 212 rotatably combined to the first bracket 211. The first wire 312 interlocked with the first steering lever 310 is connected to the first fixing projection 215.

The second fixing projection 235 is spaced apart from a center point where the second bracket 231 and the second wheel 232 combine, in a vertical line to the front or to the rear. If the second fixing projection 235 is disposed at the center of the second wheel 232, a turning radius may increase due to a small or no rotation angle of the second bracket 231.

When the user applies the manipulation power (for example, grip strength of the user) by gripping the second steering lever 330 installed at the left end of the handle 110, the second wire 332 connected to the second steering lever 330 is pulled and thus power is transferred to the second front wheel unit 230 while the second wheel 232 rotates to the left. Here, a rotation angle of the second wheel 232 is controlled according to size of the manipulation power applied to the second steering lever 330.

Here, the second cable 331 reduces resistance such that the second wire 332 smoothly moves from the second steering lever 330 to the second fixing projection 235 of the second front wheel unit 230, and shows directivity of pulling force of the second wire 332. For example, if the second wire 332 is pulled as force is applied from the top of the second bracket 231, the second bracket 231 does not rotate.

Since an operation relationship of the first steering lever 310 on the opposite side is similar to that of the second steering lever 330, descriptions thereof are not repeated.

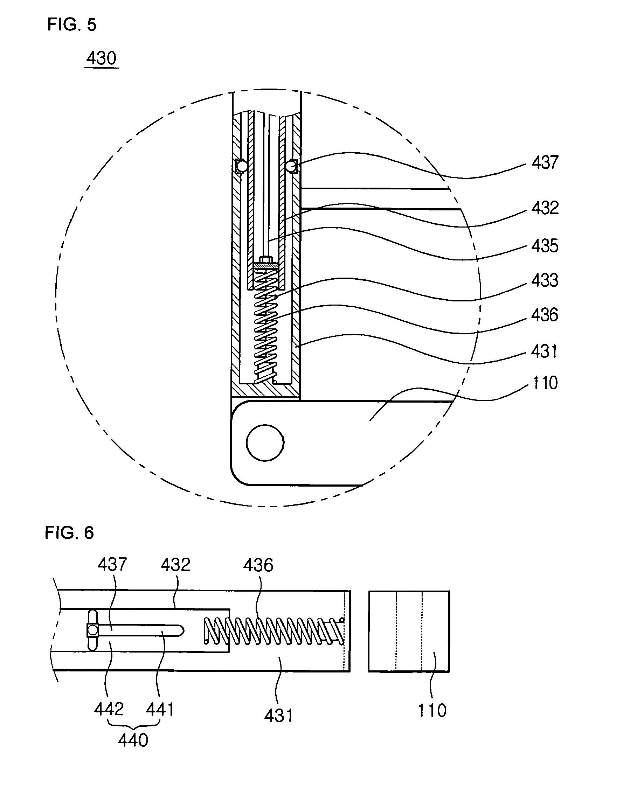

FIG. 4 illustrates a second steering unit 400 according to another embodiment of the present invention, FIG. 5 is a magnified view of the second steering unit 400, and FIG. 6 is a side view of the second steering unit 400 of FIG. 5. Referring to FIGS. 4 through 6, a left end of the handle 110 is moved backward in a parallel state, and the second front wheel unit 230 is operated according to manipulation power of such movement.

A second connection bar 431 is combined such that one side of the second steering unit 400 is rotatable at left and right sides of the handle 110. The second connection bar 431 includes a second cylinder 432 therein, wherein an outer circumference surface of the second cylinder 432 is sliadable on the second connection bar 431. A second wire 436 is slidably combined to the second cylinder 432 and the second connection bar 431 therein.

One end of the second wire 436 is fixed to the second connection bar 431 and another end of the second wire 436 is connected to the front wheel unit 230. The second bracket 231 combined to the second front wheel unit 230 includes the second fixing projection 235 fixed to the other end of the second wire 332. Although not illustrated, the first front wheel unit 210 on the other side corresponding to the second front wheel unit 230 also includes the first fixing projection 215. The first wire 312 is fixed to the first fixing projection 215, and is operated as the first steering lever 310 rotates. The second cable 331 connecting the second front wheel unit 230 and the first cable 311 connecting the first front wheel unit 210 are connected to each other by crossing in an X shape. First and second cables 435 further includes the support piece 250 at one side of the driving unit 200 so as to support tensile force of each embedded wire.

Also, the second steering unit 400 further includes a second spring 433 for releasing rotation of the second front wheel unit 230 by restoring a location of the second wire 436 when manipulation power of a user is released. Also, a second connection bearing 437 is inserted between the second cylinder 432 and the second connection bar 431 so as to reduce resistance and noise during sliding.

A second steering unit 430 is operated as the second connection bar 431 slides on the second cylinder 432, wherein a guide groove 441 is formed on the side of the second cylinder 432 so that the second connection bearing 437 moves back and forth. A fixing groove 442 is formed at one end of the guide groove 441 such that the second connection bearing 437 moves in an up-and-down direction, and when the user applies pressure in an up or down direction to the handle 110, the second connection bearing 437 is disposed at the fixing groove 442, and thus the second connection bar 431 is restricted from being separated toward the user. In other words, the second connection bearing 437 is caught at the fixing groove 442, and thus the second connection bar 431 is restricted from moving in a forward-backward direction. Accordingly, the second steering unit 430 may be prevented from being unintentionally moved when the user moves the body to a rear direction.

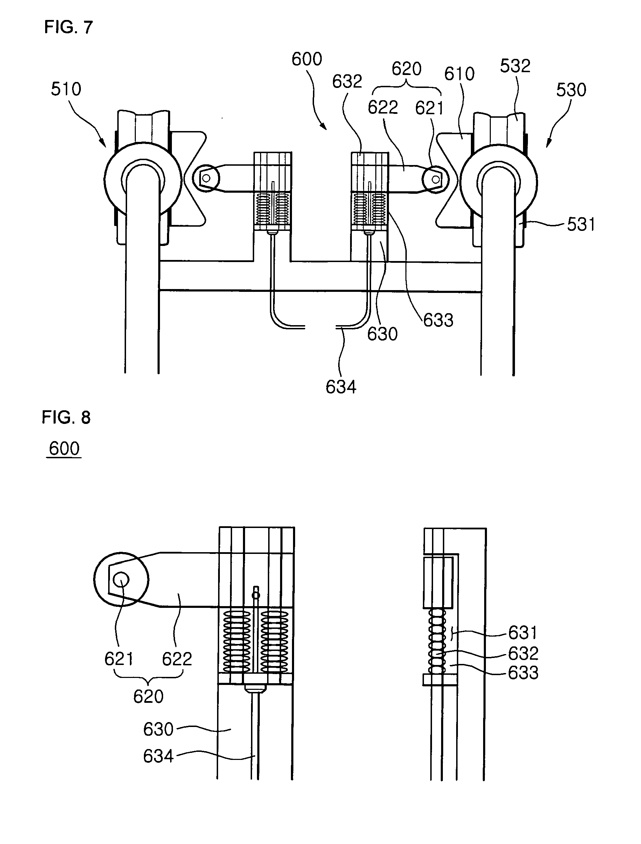

FIG. 7 illustrates a steering unit 600 of a manual direction controlled transport apparatus, according to another embodiment of the present invention, and FIG. 8 is a magnified view of a second guide bar 620 and a second guide housing 630 of FIG. 7. Referring to FIGS. 7 and 8, the steering unit 600 includes a second diffraction member 610 disposed at one side of a second bracket 531 and having a second incline 611, the second guide bar 620 including a second roller 621 that pressurizes the second incline 611 by contactably facing the second diffraction member 610 and a second guide arm 622 to which the second roller 621 is rotatably combined and that moves in a straight line to the front or to the rear integrally with the second roller 621, and the second guide housing including a second guide road 632 that penetrates through the second guide arm 622 to guide the second guide arm 622 such that the second guide arm 622 moves in a straight line to the rear by a second wire 634 and a second elastic member 633 that is combined on the second guide road 632 to apply elastic restoring force to the second guide arm 622.

The second diffraction member 610 is combined to a side of the second bracket 531, and has a cross section of an approximate M shape. Accordingly, the second diffraction member 610 has two protruding ends and a concave center, and thus has the second incline 611 from the concave center to the protruding end. The second incline 611 is disposed such that the second roller 621 contacts the second incline 611 while moving in a straight line to the rear. The second diffraction member 610 may include another incline (not shown) toward the front to face the second incline 611, and a second wheel 532 may rotate to the right as the second roller 621 contacts the other incline while moving in a straight line to the front.

The second guide bar 620 includes the second guide arm 622 and the second roller 621, and is disposed to move in a straight line in the second guide housing 630. Here, the second guide arm 622 has one side combined to the second roller 621, and another side to which the second guide road 632 penetrating through the second guide arm 622 is inserted.

A second guide groove 631 having a cross section of an approximate [ shape is formed in the second guide housing 630, the second guide road 632 guiding the straight movement of the second guide arm 622 is combined to the top of the second guide groove 632, and the second guide road 632 includes the second elastic member 633 for restoring the straight movement of the second guide arm 622.

A pair of the second guide roads 632 having a long bar shape are inserted to the other side of the second guide arm 622, and the second guide arm 622 moves in a straight line on the second guide road 632.

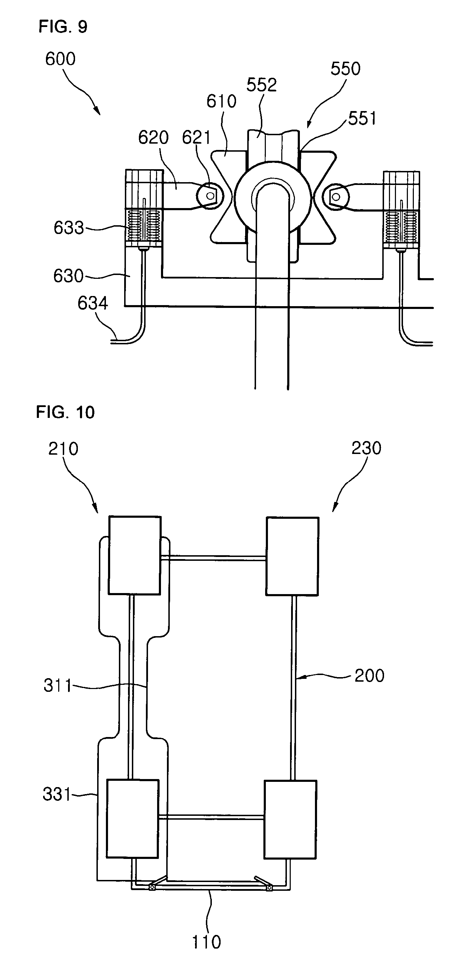

FIG. 9 illustrates the steering unit 600 of a manual direction controlled transport apparatus, according to another embodiment of the present invention. Referring to FIG. 9, a wheel unit 550 is disposed at each side of the steering unit 600 of FIG. 8. Accordingly, the steering unit 600 is disposed on two sides across the wheel unit 550, and the steering unit 600 may be disposed at any of front, back, left, and right sides of the wheel unit 550, wherein a heading direction is controllable by adjusting one wheel unit 550.

FIG. 10 is a schematic diagram for describing a method of controlling steering unit 300 of FIG. 1. Referring to FIG. 10, the first and second cables 311 and 331 are connected to the first front wheel unit 210. The first and second cables 311 and 331 may be disposed at the second front wheel unit 230 and any other wheel unit, and may control each of two front wheels or two rear wheels.

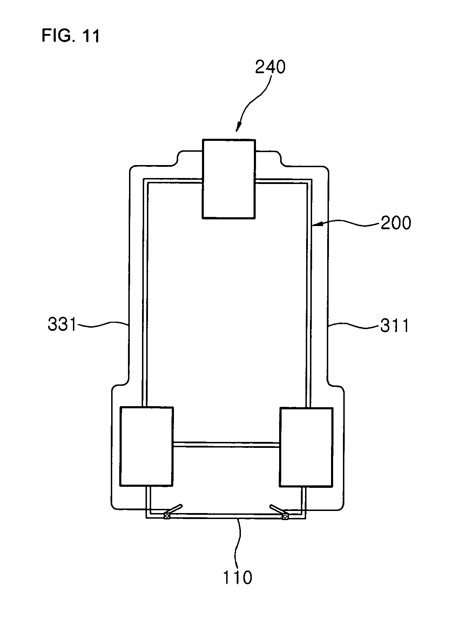

FIG. 11 is a schematic diagram for describing a steering method according to another embodiment of the present invention. The driving unit 200 of FIG. 11 includes a third front wheel unit 240. Here, one wheel is disposed at the front or at the rear so as to steer the one wheel at two sides. Thus, a third rear wheel unit (not shown) may be provided instead of the third front wheel unit 240.

Method of operating a manual direction controlled transport apparatus, according to embodiments of the present invention will now be described in detail.

Referring to FIGS. 1 through 3, when the user applies manipulation power by pulling the second steering unit 430 provided at the left end of the handle 110, the second connection bar 431 connected to the second steering unit 430 is pulled and slides on the outer circumference surface of the second cylinder 432. At this time, one side of the second wire 436 fixed to the inner side of the second connection bar 431 is extended and another side of the second wire 436 is contracted by the second fixing projection 235 formed at the second front wheel unit 230, and thus the second front wheel unit 230 rotates.

Here, the second spring 433 disposed between the second connection bar 431 and the second cylinder 432 is extended thereby generating restoring force according to elasticity, and when the manipulation power is released, the handle 110 is restored by the restoring force of the second spring 433. Of course, a rotation angle of the second wheel 232 is controlled by a size of the manipulation power applied to the second steering unit 430.

A controlling method and a structure of connecting the second steering unit 430 and the second front wheel unit 230 according to the other embodiment have been described with reference to FIGS. 4 and 5, and since a controlling method and a structure of connecting a first steering lever and a first front wheel unit are similar thereto, details thereof are not repeated.

FIG. 6 will now be additionally described with reference to FIG. 5. The fixing groove 442 is formed at the second cylinder 432 so as to prevent the heading direction from being unintentionally changed as the second connection bar 431 slides backward like the handle 110 shown in FIGS. 4 and 5 when the user moves the manual direction controlled transport apparatus backward. Accordingly, if the user wants to move the manual direction controlled transport apparatus backward in a straight line, the user may pull the handle 110 by selectively pressurizing the handle 110 in an up-and-down direction to move backward in a straight line while preventing sliding of the second connection bar 431.

Referring to FIGS. 7 through 9, the first and second front wheel units may be steered as the steering unit 600 moves in a straight line in a forward-backward direction. The second guide bar 622 is pulled as the user pulls a second wire 634 and the second roller 621 combined to one end of the second guide bar 620 pressurizes the second incline 611 of the second diffraction member 610, thereby rotating the second front wheel unit to the left. Thus, the front wheel unit at the outer side is rotated. Accordingly, when the front wheel unit at the outer side is rotated, each wire may be installed to cross each other in an X shape, and when the front wheel unit at an inner side is rotated, wires may be parallel to each other.

The manual direction controlled transport apparatus according to the present invention may be easily applied to a shopping cart, a wheel chair, a stroller, a bed for a patient or an infant, or the like.

A direction of the manual direction controlled transport apparatus according to the present invention can be easily adjusted with little effort even if the manual direction controlled transport apparatus is heavy.

Also, straightness of a front wheel may be stably controlled by the steering unit that can be easily applied to a shopping cart, a wheel chair, a stroller, a bed for a patient or an infant, or the like.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A manual direction controlled transport apparatus comprising:
a body to which a handle transferring manipulation power of a user is combined;
a driving unit comprising one or more wheel units combined to the body, and moving the body; and
a steering unit combined to the handle, and controlling a rotation direction of the body by transferring the manipulation power to the wheel unit to adjust a heading direction of the wheel unit.

2. The manual direction controlled transport apparatus of claim 1, wherein the manipulation power is grip strength, and
the steering unit comprises:
first and second steering levers respectively combined to the right and left sides of the handle so as to adjust a steering angle of the wheel unit as the user adjusts the grip strength; and
first and second cables in which first and second wires are respectively slidably installed, and respectively rotating the wheel unit selectively to the right or left by applying tensile force to the driving unit according to the grip strength as one end of the first wire is connected to the first steering lever, one end of the second wire is connected to the second steering lever, and other ends of the first and second wires are connected to the driving unit.

3. The manual direction controlled transport apparatus of claim 1, wherein the manipulation power is pulling strength, and
the steering unit comprises:
first and second connection bars having one sides respectively connected to the left and right of the handle to be rotatable with respect to a vertical axis;
first and second cylinders disposed sliably respectively on inner circumference surfaces of the first and second connection bars as first and second connection bearings are disposed respectively on outer circumference surfaces of the first and second cylinders; and
first and second cables in which first and second wires are respectively slidably installed, and respectively rotating the wheel unit selectively to the right or left by applying tensile force to the wheel unit according to the pulling strength as one end of the first wire is connected to the first connection bar, one end of the second wire is connected to the second connection bar, and other ends of the first and second wires are connected to the wheel unit.

4. The manual direction controlled transport apparatus of claim 2 or 3, wherein the wheel unit comprises:
a first bracket combined rotatably to a left side of the body;
a first wheel combined to the first bracket;
a second bracket combined rotatably to a right side of the body; and
a second wheel combined to the second bracket,
wherein the other end of the first wire is connected to a location spaced apart from one side of a rotation center of the first bracket to the front or to the rear, and the other end of the second wire is connected to a location spaced apart from one side of a rotation center of the second bracket to the front or to the rear.

5. The manual direction controlled transport apparatus of claim 4, wherein a first fixing projection is formed on one side of the first bracket at a location spaced apart from the rotation center of the first bracket to the front or to the rear so as to be connected to the other end of the first wire, and a second fixing projection is formed on another side of the second bracket at a location spaced apart from the rotation center of the second bracket to the front or to the rear so as to be connected to the other end of the second wire.

6. The manual direction controlled transport apparatus of claim 2 or 3, wherein the wheel unit comprises:
a bracket rotatably combined to the body; and
a wheel combined to the bracket,
wherein the other end of the first wire is connected to a location spaced apart from one side of a rotation center of the bracket to the front or to the rear, and the other end of the second wire is connected to a location spaced apart from another side of the rotation center of the bracket to the front or to the rear.

7. The manual direction controlled transport apparatus of claim 6, wherein a first fixing projection is formed on one side of the bracket at a location spaced apart from the rotation center of the bracket to the front or to the rear so as to be connected to the other end of the first wire, and a second fixing projection is formed on another side of the bracket at a location spaced apart from the rotation center of the bracket to the front or to the rear so as to be connected to the other end of the second wire.

8. The manual direction controlled transport apparatus of claim 2 or 3, wherein the driving unit further comprises one or more support pieces for adjacently fixing the first and second cables to the other ends of the first and second wires on the body such that the first and second wires are pulled on the body.

9. The manual direction controlled transport apparatus of claim 2, wherein in the first and second cables, the first steering lever is connected to rotate the wheel unit to the right and the second steering lever is connected to rotate the wheel unit to the left.

10. The manual direction controlled transport apparatus of claim 2 or 3, wherein the wheel unit comprises:
a first bracket rotatably combined to the body;
a first wheel combined to the first bracket; and
a first diffraction member fixed to one side of the first bracket and having a first incline at a side inclining to the front or to the rear,
wherein the steering unit comprises:
a first guide bar comprising a first roller that is disposed to face the first diffraction member, is spaced apart from the first diffraction member while the body moves back and forth, and pressurizes the first incline by moving in a straight line to the front or to the rear while the body rotates, and a first guide arm to which the first roller is rotatably combined and that moves in a straight line to the front or to the rear; and
a first guide housing comprising a first guide road that penetrates through the first guide arm to guide the first guide arm such that the first guide arm moves in a straight line to the rear by the first wire, and a first elastic member combined on the first guide road to apply elastic restoring force to the first guide arm.

11. The manual direction controlled transport apparatus of claim 10, wherein the first bracket is rotatably combined to the left side of the body, and
the wheel unit further comprises:
a second bracket rotatably combined to the right side of the body;
a second wheel combined to the second bracket; and
a second diffraction member fixed to one side of the second bracket and having a second incline at a side inclining to the front or to the rear,
wherein the steering unit further comprises:
a second guide bar comprising a second roller that is disposed to face the second diffraction member, is spaced apart from the second diffraction member while the body moves back and forth, and pressurizes the second incline by moving in a straight line to the front or to the rear while the body rotates, and a second guide arm to which the second roller is rotatably combined and that moves in a straight line to the front or to the rear integrally with the second roller; and
a second guide housing comprising a second guide road that penetrates through the second guide arm to guide the second guide arm such that the second guide arm moves in a straight line to the rear by the second wire, and a second elastic member combined on the second guide road to apply elastic restoring force to the second guide arm.

12. The manual direction controlled transport apparatus of claim 2 or 3, wherein the wheel unit further comprises a second diffraction member fixed to another side of the first bracket and having a second incline at a side inclining to the front or to the rear,
wherein the steering unit further comprises:
a second guide bar comprising a second roller that is disposed to face the second diffraction member, is spaced apart from the second diffraction member while the body moves back and forth, and pressurizes the second incline by moving in a straight line to the front or to the rear while the body rotates, and a second guide arm to which the second roller is rotatably combined and that moves in a straight line to the front or to the rear integrally with the second roller; and
a second guide housing comprising a second guide road that penetrates through the second guide arm to guide the second guide arm such that the second guide arm moves in a straight line to the rear by the second wire, and a second elastic member combined on the second guide road to apply elastic restoring force to the second guide arm.

13. The manual direction controlled transport apparatus of claim 3, wherein the wheel unit comprises a first front wheel unit and a second wheel unit, which are spaced apart from each other,
wherein the steering unit further comprises:
a first spring disposed between a rear portion of the first cylinder and an inner side surface of the first connection bear in the first connection bar, and releasing rotation of the first front wheel unit by restoring a location of the first wire when the manipulation power of the user is released; and
a second spring disposed between a rear portion of the second cylinder and an inner side surface of the second connection bar in the second connection bar, and releasing rotation of the second front wheel unit by restoring a location of the second wire when the manipulation power of the user is released.

14. The manual direction controlled transport apparatus of claim 3, further comprising:
a first connection bearing combined to an inner surface of the first connection bar to rotatably contact a first guide groove extending at a side of the first cylinder in a forward-backward direction; and
a second connection bearing combined to an inner surface of the second connection bar to rotatably contact a second guide groove extending at a side of the second cylinder in a forward-backward direction.

15. A manual direction controlled transport apparatus of claim 14, wherein a first fixing groove is formed on the first cylinder to cross the first guide groove in an incline direction such that movement of the first connection bar in the forward-backward direction is limited when the first connection bearing is caught at the first fixing groove, and
a second fixing groove is formed on the second cylinder to cross the first guide groove in an incline direction such that movement of the second connection bar is limited in the forward-backward direction when the second connection bearing is caught at the second fixing groove.

16. The manual direction controlled transport apparatus of claim 1, wherein the body further comprises a storage unit having a load space for storing a product.

17. The manual direction controlled transport apparatus of claim 1, being any one of a manual cart, a hospital bed for a patient, a wheelchair, a traveling carrier, and a stroller.
